# EUROPEAN PATENT APPLICATION

(11) **EP 1 450 244 A2**
(43) Date of publication of application: **25.08.2004**
(21) Application number: 04001379.9
(22) Date of filing: 22.01.2004
(51) Int. Cl.: G06F 3/033, G06F 3/023

(54) **Insertion location tracking for controlling a user interface**

(30) Priority: 31.01.2003 US 453701 P; 06.05.2003 US 431049
(71) Applicant: MICROSOFT CORPORATION, Redmond, WA 98052 (US)
(72) Inventor: Garside, Adrian J., Sammamish WA 98074 (US); Keely, Leroy B., Portola Valley CA 94028 (US); Wick, Thomas R., Seattle WA 98112 (US); Mak, William, Seattle WA 98104 (US); Leno, Grady, Seattle WA 98101 (US); Dodge, Steve, Sammamish WA 98074 (US); Torset, Todd A., Woodinville WA 98072 (US)
(74) Representative: Grünecker, Kinkeldey, Stockmair & Schwanhäusser Anwaltssozietät

(57) **Abstract**

Techniques are disclosed for controlling the behavior of a data entry user interface, such as a data input panel, based upon the status of an insertion location. For example, both the position and content of a data input panel are provided based upon the detected characteristics of the insertion location. Further, a technique for invoking or dismissing a data entry user interface may be provided based upon the status of an insertion location.

## Description

### RELATED APPLICATION INFORMATION

This application is a continuation-in-part application of U.S. Patent Application No. 10/356,315 entitled "Utility Object For Specialized Data Entry", filed on January 31, 2003, and naming Kyril Feldman et al. as inventors, which prior application is incorporated entirely herein by reference.

### FIELD OF THE INVENTION

Various aspects of the invention relate generally to the creation of automatic responses based upon the status of an insertion location. Various examples of the invention have particular application to the invocation of a data entry user interface based upon a detected status of an insertion location,.

### BACKGROUND OF THE INVENTION

As computers have evolved, a variety of techniques have been developed to enhance the user's experience and to make computers more versatile. For example, many software applications provide a variety of automatic responses to a user's actions in order to make the user's experience more convenient. These applications may, for example, automatically complete a word being typed by the user, reformat text being moved from one location within an application to another, or automatically connect to a network location, such as an Internet Web site, when the user places an insertion point within a reference to that network location. While these automatic responses to a user's actions enhance the user's experience, they are typically limited to resources contained within or linked to the application. It therefore would be useful to also give a user automatic access to resources outside of the particular application being used. For example, it would be useful to automatically provide a user with a data entry user interface in a consistent manner for a variety of applications.

The WINDOWS® brand XP Tablet PC Edition operating system provides a data entry user interface, sometimes referred to as the text input panel, the Tablet PC input panel or "TIP," through which a user can employ a pen or stylus to enter data into a computer. This type of user interface falls into the broader category of data entry graphical user interfaces, and may also be referred to as a data input panel. A data input panel may, for example, provide a writing surface that converts movement of the stylus across the surface into electronic ink. Some versions of the data input panel can then translate the electronic ink into text, while other types of data input panels can alternately or additionally provide the electronic ink directly to an application running on the computer. Some data input panels also may provide a "soft" keyboard surface that displays the characters of a conventional keyboard. If the user employs a stylus to tap on the display of a key with this type of keyboard, then the computer will receive the character associated with that key as input data. Other types of data input panels may have specialized input surfaces. For example, user interfaces provided by the Microsoft Input Method Editors lime) may provide a plurality of letter-sized writing surfaces for receiving characters in an East Asian alphabet as input.

In addition to providing alternate data entry techniques, various types of data input panels may also help clarify ambiguities regarding data entry. For example, some applications may include edit controls that both allow a user to write electronic ink directly into the control and display previously entered ink or text. With these types of edit controls, however, it may be difficult for the user to distinguish between insertion of new data and manipulation of existing displayed data. For example, if the user interface displays existing text or ink, it may confuse an attempt to select existing text or ink using a stylus with an attempt to create a "-" character. Advantageously, many types of data input panels separate existing ink or text from the entry of new text, thereby helping to clarify any ambiguities as to whether a user is adding data to an application or simply manipulating existing data.

While these types of data input panel substantially increase the usefulness of computers that employ a stylus input device, there are still some inconveniences associated with conventional data input panels. First, data input panels must be specifically invoked by a user. Thus, in order to enter data into an application using a data input panel, the user must manually activate the data input panel from outside of the application. Many computer users are unfamiliar with data input panels, however, and may overlook or not know how to invoke this resource. As a result, a developer creating a software application cannot be certain that a user will know how to manually summon a data input panel to enter data into the application. The developer must instead hope that the user will be able to activate and use the data input panel or provide an alternate data input method.

Second, because the data input panel is a graphical user interface invoked separately from the application, it typically is displayed separately from the application as well. In some situations, the user interface may be overlaid onto the application. While this arrangement allows the user to enter data close to its destination in the application, the user interface may inadvertently obscure that destination or adjacent destinations. Even if the user interface does not initially obscure a desired destination for entered data, however, the user may need to constantly relocate the user interface as new data is entered into the application, to prevent the user interface from obscuring the new insertion locations for that data. With still other types of data input panels, the user interface may be "docked" in a space below the application. While positioning the data input panel in this fashion ensures that it will not prevent the user from viewing a desired destination for new data, it is inconvenient for the user to continuously move the stylus back-and-forth between the application and the data input panel to both control the application and enter data into the application.

Third, because of the variety of data input techniques offered by a typical data input panel, it is often inconvenient for a user to determine which technique is the most appropriate for entering data into a particular location in an application. For example, an application may contain an edit control for receiving a case-sensitive password. If, however, the user attempts to enter a password into the edit control by writing electronic ink onto a writing surface of a data input panel, the user's handwriting may be incorrectly recognized. Further, if the edit control intentionally hides the incorrectly recognized text to prevent an unauthorized bystander from viewing a password, the user may not even realize why his or her password is not being accepted. In this situation, it might be preferable for the user to instead enter data into the edit control using a keyboard surface rather than the writing surface. With many conventional data input panels, however, the user must realize that the keyboard surface is more appropriate for the task and change the data input panel to that display that surface himself.

### BRIEF SUMMARY OF THE INVENTION

Advantageously, various implementations of the invention relate to providing automatic responses to a user's actions. In particular, some examples of the invention relate to a tool that automatically creates a data entry user interface based upon the detected status of an insertion location. According to these implementations, for example, the user interface may be rendered close to the location of the insertion location, but without obscuring data that is entered at that location. Still further, with various examples of the invention, the data entry user interface is rendered only when a user establishes an insertion location using a device, such as a stylus, that is appropriate for entering data through that data entry user interface. Additionally, with some examples of the invention, the features of the data entry user interface are configured based upon the detected status of the insertion location. For example, if the insertion location is within an edit control for receiving a password, then the data entry user interface may be a data input panel automatically configured to provide a soft keyboard surface instead of a writing surface for receiving and recognizing electronic ink. Still other examples of the invention will alternately or additionally assign a method of invoking a data entry user interface based upon a detected status of an insertion location.

According to some implementations of the invention, an insertion location tracking tool continuously tracks the status of the insertion location. The tool may, for example, collect insertion location status information from an application through various components of an operating system or other appropriate systems. The tool may determine the insertion location status based upon each piece of obtained information, or it may sample only a portion of the total obtained information determine the insertion location status. For example, the tool may receive a large number of event messages containing insertion location status information, place each of the event messages in a queue, and periodically sample the most recently queued event message to determine the status of the insertion location. The sampling period may be based upon time, or it may be based upon the total number of event messages received.

With various examples of the invention, the insertion location status is employed to provide a user with a data entry user interface, such as a data input panel. The data entry user interface may, for example, be rendered proximal to the location of a detected insertion location. Alternately or additionally, the features of the data entry user interface may be configured according to the detected status of the insertion location. Thus, if the detected insertion location is a location point within an edit control for receiving a password or other unpredictable assortment of characters, a data entry user interface may include a keyboard surface rather than a writing surface for receiving and recognizing electronic ink.

Still further, the detected insertion location status may be used to determine a particular technique for invoking the data entry user interface. For example, if the detected insertion location is an insertion point that has no data following it, or is otherwise likely to be used only to enter new data, then the data entry user interface may be invoked immediately. If, however, the detected insertion location is a replaceable selection of text that is likely to be dragged or replaced with new data, then the data entry user interface may be invoked through a separate icon or ''target.'' The data entry user interface may then be rendered when, for example, a user passes a pointer through the target, maintains a pointer hovering over the target, or contacts the target with a stylus. Also, the insertion location status may be used to determine how a data entry user interface is dismissed. Thus, if a change in the insertion location status indicates that an edit control has lost input focus, then this indication may be used to automatically close a data entry user interface associated with that edit control.

### BRIEF DESCRIPTION OF THE DRAWINGS

Figure 1 illustrates a general operating environment that may be used to implement various embodiments of the invention.

Figure 2 illustrates an insertion location control tool according to various embodiments of the invention.

Figure 3 illustrates an insertion location tracking module that may be employed with the insertion location control tool illustrated in Figure 2.

Figures 4A and 4B illustrate a flow chart describing a method for monitoring the status of an insertion location according to various embodiments of the invention.

Figure 5 illustrates one example of a data input panel according to various embodiments of the invention.

Figure 6A illustrates one example of the use of edit controls in an application user interface that may be employed with various embodiments of the invention, while Figures 6B-6D illustrate the insertion of text into the edit controls illustrated in Figure 6A.

Figures 7-9 illustrate alternate positioning of a data input panel relative to the edit control boundaries windows according to various embodiments of the invention

Figure 10 illustrates an example of a data input panel with an Asian language writing surface.

Figure 11 illustrates an example of a data input panel with a supplemental numbers keypad.

Figure 12 illustrates an example of a data input panel with a supplemental symbols keypad.

Figure 13 illustrates an example of a text input panel with reversed orientation.

### DETAILED DESCRIPTION OF THE INVENTION

### Overview

As will be discussed in detail below, various embodiments of the invention monitor the status of an insertion location. These embodiments may, for example, monitor both the position of an insertion location and the field, edit control or user interface in which the insertion location occurs. Various embodiments of the invention may then perform one or more actions based upon the characteristics of the insertion location. Alternately or additionally, various embodiments of the invention may provide this status information to another object or process that will then perform one or more actions based upon this insertion location status information. For example, some embodiments may control a user interface for data entry based upon the characteristics of the insertion location. Accordingly, various operating environments in which different embodiments of the invention may be implemented will be discussed, along with different techniques for monitoring the status of an insertion location according to various embodiments of the invention. Different examples of control of a data user interface based upon the monitored characteristics of the insertion location also will be discussed.

### Operating Environment

A tool for controlling a user interface based upon the status of an insertion location according to various embodiments of the invention can be implemented using hardware, software, firmware, or a combination thereof. For example, some embodiments of the invention may be implemented by functional modules that track the status of an insertion location and control the operation of a data entry user interface. Each of the modules may be implemented solely with analog or digital electronic circuitry. As will be appreciated by those of ordinary skill in the art, however, the modules also may be implemented using executable software instructions controlling programmable electronic circuitry, such as found in conventional programmable computing devices like personal and laptop computers.

More particularly, an insertion location tracking and user interface control tool according to various embodiments of the invention may be described in the general context of computer-executable instructions, such as program modules, executed by one or more programmable computing devices. Generally, program modules may include routines, programs, objects, components, data structures, etc. that perform particular tasks or implement particular abstract data types. Typically the functionality of the program modules may be combined or distributed as desired in various embodiments.

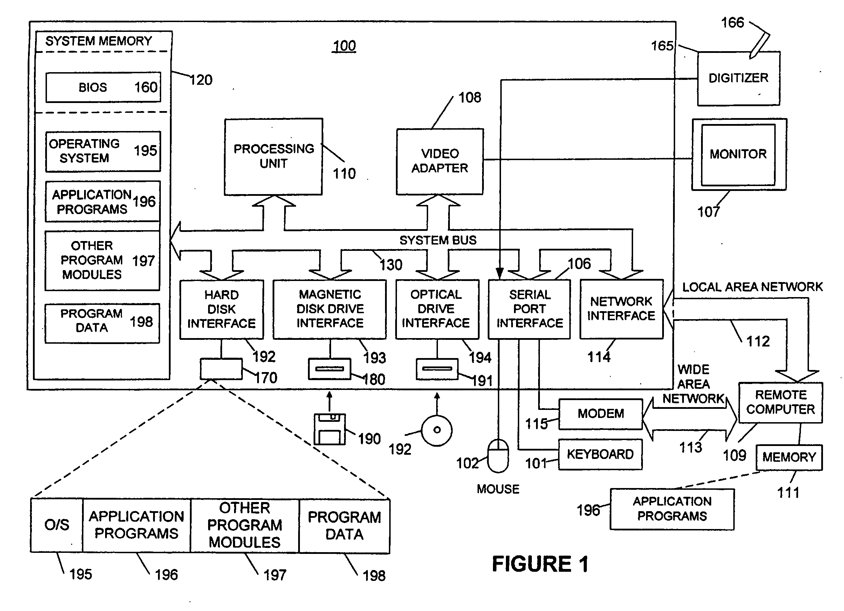

Because various embodiments of the invention may be implemented using programmable computer devices programmed with software, it may be helpful for a better understanding of the invention to briefly discuss the components and operation of a typical programmable computing device (hereafter referred to simply as a computer) on which various embodiments of the invention may be employed. Figure 1 is a functional block diagram of an example of a conventional general-purpose digital computing environment that can be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the personal computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment.

A number of program modules can be stored on the hard disk drive 170, magnetic disk 190, optical disk 192, ROM 140 or RAM 150, including an operating system 195, one or more application programs 196, other program modules 197, and program data 198. A user can enter commands and information into the computer 100 through input devices such as a keyboard 101 and pointing device 102. Other input devices (not shown) may include a microphone, joystick, game pad, satellite dish, scanner or the like. These and other input devices are often connected to the processing unit 110 through a serial port interface 106 that is coupled to the system bus, but may be connected by other interfaces, such as a parallel port, game port or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor, personal computers typically include other peripheral output devices (not shown), such as speakers and printers. In a preferred embodiment, a pen digitizer 165 and accompanying pen or stylus 166 are provided in order to digitally capture freehand input, such as ink. Although a direct connection between the pen digitizer 165 and the serial port is shown, in practice, the pen digitizer 165 may be coupled to the processing unit 110 directly, via a parallel port or other interface and the system bus 130 as known in the art. Furthermore, although the digitizer 165 is shown apart from the monitor 107, in many embodiments of the invention, the usable input area of the digitizer 165 is co-extensive with the display area of the monitor 107. Further still, the digitizer 165 may be integrated in the monitor 107, or may exist as a separate device overlaying or otherwise appended to the monitor 107.

Application programs 196 and program modules 197 may include a parsing module and a recognition module for use in receiving and analyzing ink input via the stylus 166. The parsing module may be used to analyze received strokes and group the strokes into ink objects (e.g., characters, words, drawings, etc.). The recognition module may be used to analyze ink objects and perform character recognition on ink objects corresponding to alphanumeric handwritten entry. The recognition information may then be stored as a property of the ink object. Examples of such parsing and recognition modules are available from Microsoft Corporation of Redmond, Washington in the Tablet PC Platform Software Development Kit (SDK).

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet and use both wired and wireless communication protocols.

When used in a LAN networking environment, the computer 100 is connected to the local network 112 through a network interface or adapter 114. When used in a WAN networking environment, the personal computer 100 typically includes a modem 115 or other means for establishing a communications over the wide area network 113, such as the Internet. The modem 115, which may be internal or external, is connected to the system bus 130 via the serial port interface 106. In a networked environment, program modules depicted relative to the personal computer 100, or portions thereof, may be stored in the remote memory storage device.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

As previously noted, one or more aspects of the invention may be embodied in computer-executable instructions, such as in one or more program modules, executed by one or more computers or other devices. Generally, these program modules may include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. The functionality of the program modules may be combined or distributed as desired in various embodiments. In addition, the functionality may be embodied in whole or in part in firmware or hardware equivalents such as integrated circuits, field programmable gate arrays (FPGA), and the like.

### Determining The Insertion Location Status

### The Use Of Insertion Locations In User Interfaces

Most software applications typically have some type of feature or component for accepting input data from a user. With applications having graphical user interfaces, these features or components are typically referred to as controls. Thus, a control may be a displayed object that can be manipulated by the user to perform an action. Two examples of controls include buttons that can be "checked" by a user through the use of a pointing device and scroll bars that also may be manipulated through a pointing device. A containing window for a windowed user interface is still another type of control, which allows a user to manipulate the contents of a windowed user interface. The characteristics and behavior of a control are typically specified by the application hosting the control.

Bounded areas into which a user can enter text data with, for example, a keyboard, are commonly referred to as edit controls. As will be appreciated by those of ordinary skill in the art, there are a variety of different types of edit controls. For example, in addition to conventional edit controls that accept character data from a keyboard, some operating systems, such as the Microsoft WINDOWS® brand XP operating system, allow applications to include a rich edit control. A rich edit control accepts both input text and various types of metadata associated with the inserted text. Further, some operating systems, such as the Microsoft WINDOWS® brand XP Tablet PC Version operating system, may alternately or additionally allow an application to include an ink edit control. An ink edit control is a type of rich edit control that additionally permits a user to enter data into the control by manipulating a stylus-type pointing device to create electronic ink. With some ink edit controls, the ink may then be converted into text, while with other types of ink edit controls the electronic ink may be processed without translation into text.

Typically, the application, or a system hosting the application (such as an operating system), will provide an insertion location where data created by an input device will be inserted into a control. For example, an application may display an insertion point to indicate where data created by an input device will be inserted. An insertion point typically may be displayed as a blinking vertical line. The position of the insertion point will conventionally be controlled by one or more input devices. Thus, a user may employ a pen 166, mouse, trackball, joystick, touchpad or other pointing device to position a cursor at a desired location within a desired control, and activate a control command (sometimes referred to as "clicking") to position the insertion point at that location. With some software applications and operating systems employing a stylus 166, a user may place an insertion point in the bounding area of a control simply by contacting the stylus 166 against the digitizer 165 at a position corresponding to the desired location. Further, the location of the insertion point within the control may be moved in response to the input of data at the insertion point. For example, with a control that accepts text data from a keyboard, the insertion point may automatically and continuously be moved to the end of any text inserted into the control.

Alternately, the insertion location may be a selection of replaceable text. More particularly, when a user wishes to replace a selection of text or other characters (such as space characters) with new input data, the user may select the entire text to be replaced. For example, a user may activate a command button associated with a pointing device, and then move the pointing device so that a displayed pointer passes over or through the text to be replaced. (This process is sometimes referred to as "blocking" a selection of text. When a user then enters data into the control, the entirety of the selected text is replaced with the newly entered data.

A software application or hosting software system controlling the status of the insertion location may include reporting functionality to report the status of the insertion location to other software processes. For example, the Microsoft WINDOWS® brand XP operating system provides a text services framework. This operating system component offers enhanced functionality to software applications configured to use the services provided by the text services framework, such as the ability to receive electronic ink input and embed arbitrary metadata, such as original electronic ink input for translated text, into an application. In order to employ the services of the text services framework, however, an application must report all movements of an insertion point "caret" (or marker identifying an insertion point) within the application, and identify whether or not the insertion point is visible to a user. An application also must be able to report the display location of any text range in an edit control maintained by the application. According to some implementations of the text services framework, event message containing insertion location status information (such as a change in the position of the insertion point caret) can be broadcast to other applications hosted by the operating system. Further, some implementations of the text services framework may provide insertion location status information in response to inquires from other applications. A text services framework therefore may report the status of the insertion location to other software processes, including, for example, another component of the operating system that controls a data entry user interface.

Similarly, some versions of the Microsoft WINDOWS® brand operating system may include the Microsoft Active Accessibility® component. This component is often used, for example, to report the status of the insertion location to user interfaces for the visually-impaired, who may not otherwise be able to view the insertion location in a conventional graphical user interface. Like the text services framework component, various implementations of the Microsoft Active Accessibility® component may broadcast event messages containing insertion location status information.

Alternately or additionally, some operating systems or other software processes may provide various types of insertion location status information in response to direct inquiries for that information. For example, some software applications may include one or more controls from which various types of insertion location status information can be obtained. One such type of control is the Microsoft "MSHTML" control, often employed for Web browsing in the Microsoft Internet Explorer browser application and in other types of software applications. This type of control, for example, may easily be accessed to obtain the location of an insertion point caret within the control.

Alternately or additionally, some software applications may employ an application programming interface (API) to inform a display process of the current status of the insertion location, so that the insertion location may be displayed to a user. One such application programming interface is the WIN32 application programming interface employed by the Microsoft WINDOWS® brand operating system. Other such types of application programming interface include the Microsoft Input Method Editor (IME) interfaces, which are often used to text entry for East Asian languages. Software applications that employ this type of application programming interface may, for example, provide the interface with the location of an insertion point caret within the application.

Thus, one or more software processes can be used to obtain or receive the status of an insertion location. Further, it should be appreciated that status information for the insertion location may include any characteristics associated with that insertion location. For example, insertion location status information may include position information identifying the position of the insertion location, visibility information indicating whether or not an insertion point caret is visible, and height information indicating the height of an insertion point caret. Further, insertion location status information may typically include control information identifying the control in which an insertion location is located. The control information may, for example, specify both an application user interface containing the control and identification information identifying the control within the application user interface. The insertion location information may also identify the type of control containing the insertion location, and information relating to the state of the control. As will be explained in more detail below, an insertion location control tool according to various embodiments of the invention will monitor this insertion location information, and control the operation of a user interface, such as a data entry user interface, based upon the insertion location characteristics.

### The Insertion Location Control Tool

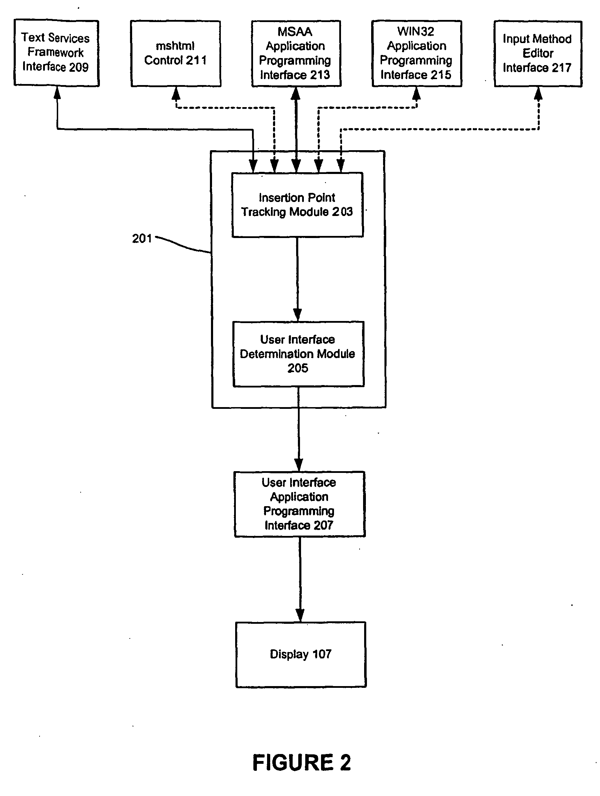

Turning now to Figure 2, this figure illustrates an insertion location control tool 201 that may be employed by various embodiments of the invention. The insertion location control tool 201 includes an insertion location tracking module 203 and a user interface a determination module 205. The insertion location tracking module 203 extracts characteristic information relating to the insertion location from various sources, and provides this information to the user interface determination module 205. Based upon the obtained characteristics of the insertion location (and information received from other types of event messages, as will also be explained in detail below), the user interface determination module 205 controls the operation of a user interface, such as a data entry user interface, provided by the user interface application programming interface 207. As will be appreciated by those of ordinary skill in the art, in response to the instructions from the user interface determination module 205, the user interface application programming interface 207 provides a user interface via display 107.

As noted above, the insertion location tracking module 203 may obtain insertion location status information from a variety of sources, including components of an operating system (or other appropriate software system), controls included within an application, and application user interfaces employed by an application. For example, with the embodiment of the invention illustrated in Figure 2, the insertion location tracking module 203 may receive event messages with insertion location status information from a text services framework interface 208 and a Microsoft Active Accessibility application programming interface 213. Additionally, the insertion location tracking module 203 may communicate inquiries to a MSHTML control 211, a Win32 application programming interface 215 and an Input Method Editor interface 217 in order to obtain various types of insertion location status information.

According to various embodiments of the invention, the insertion location tracking module 203 will employ insertion location status information from the most accurate source for a given situation. For example, the insertion location tracking module 203 may obtain characteristic data relating to the current status of the insertion location from both the Microsoft Active Accessibility application programming interface 213 and the Win32 application programming interface 215. While both the application programming interface Microsoft Active Accessibility 213 and the Win32 application programming interface 215 provide insertion location status information, however, in some situations the accuracy of one of the application programming interfaces may be higher than the other. For example, for many locations of the insertion point caret, the Microsoft Active Accessibility application programming interface 213 may provide more accurate information regarding the current status of the insertion point. If, however, the insertion point caret is located in a "rich edit" control, then the Win32 application programming interface 215 may provide more accurate information regarding the current status of the insertion point.

Additionally, the information format provided by the insertion location messages from one of the application programming interfaces 213 and 215 may be more efficient to process than the format provided by the other application programming interface. For example, in some situations, the visibility characteristics of an insertion point caret (that is, data indicating whether or not the insertion point is visible) may be more conveniently obtained from the data format provided by the Win32 application programming interface 215 than from the data format provided by the Microsoft Active Accessibility application programming interface 213. Moreover, if the insertion point is located within a windowless control, the characteristics information provided by the Microsoft Active Accessibility application user interface 215 will still allow the insertion location tracking module 203 to determine the bounding rectangle for the windowless control. Accordingly, with some embodiments of the invention, the characteristics information for the insertion location status is obtained primarily from one source, such as the Microsoft Active Accessibility application user interface 213, and the insertion location status information from another source, such as the Win32 application programming interface 215, is then used as a backup check for situations in which the second source provides higher accuracy than the first source.

In the illustrated example of the invention, a text services framework will typically be the most accurate source of insertion location status information. Accordingly, if the insertion location tracking module 203 receives event messages containing insertion location status information from the text services framework interface 209, the insertion location tracking module 203 will provide this status information to the user interface determination module 205. If, however, the operating system does not employ a text services framework, then the insertion location tracking module 203 will then process event messages from the Microsoft Active Accessibility application user interface 213 containing insertion location status information. If these event messages indicate that the insertion location is located in a control (or associated with an application user interface that can provide more accurate insertion location status information than the event messages from the Microsoft Active Accessibility application user interface 213 itself, then the insertion location tracking module 203 will request this more accurate insertion location status information. For example, if the event messages from the Microsoft Active Accessibility application user interface 213 indicate that an insertion point caret is located in the MSHTML control 211, then the insertion location tracking module 203 will obtain insertion location status information from the MSHTML control 211 rather than the Microsoft Active Accessibility application user interface 213. Otherwise, the insertion location tracking module 203 will employ the insertion location status information provided by the event messages from the Microsoft Active Accessibility application user interface 213, and supplement this information where appropriate by obtaining more accurate insertion location status information from other sources, such as the Win32 application programming interface 215 and the Input Method Editor interface 217.

It should be noted that still other application processes or sources may be employed to provide insertion location characteristic information relating to the current status of an insertion location. For example, Apple Macintosh-based systems or Unix-based systems may employ different application processes to monitor and provide insertion location characteristic information relating to the current status of an insertion location. Accordingly, various embodiments of the invention may employ these alternate application processes instead of or in addition to the text services framework interface 209, the MSHTML control 211, the Microsoft Active Accessibility application user interface 213, the Win32 application programming interface 215 and the Input Method Editor interface 217.

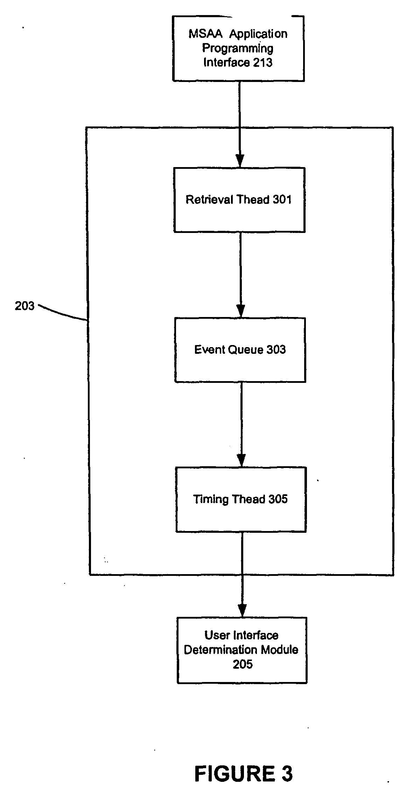

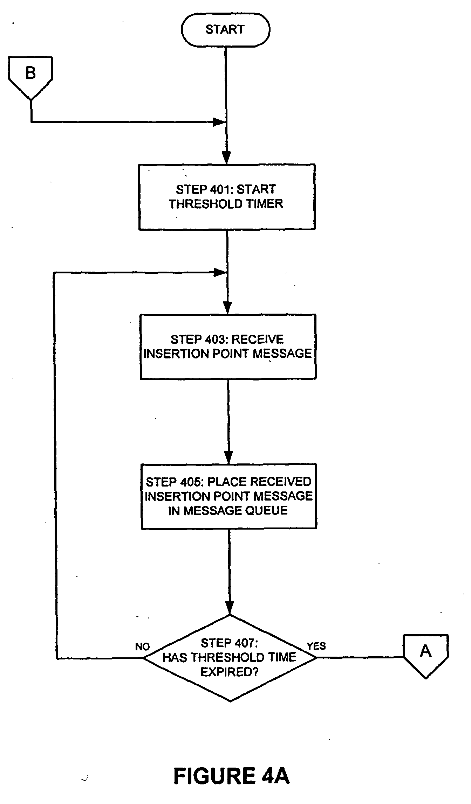

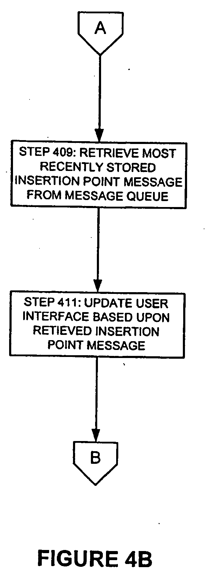

Ideally, the insertion location tracking module 203 will be able to process incoming messages with insertion location information sufficiently fast to analyze the characteristic information contained in all of the received insertion location messages while continuing to provide the user interface determination module 205 with up-to-date characteristic information regarding the status of the insertion location. As a practical matter, however, the messages may be issued too quickly to allow the insertion location tracking module 203 to monitor their insertion location characteristic information on a real-time basis. Accordingly, various embodiments of the invention may employ the insertion location tracking module 203 illustrated in Figure 3. The operation of this particular embodiment of the insertion location tracking module 203 will now be described with reference to the flow chart illustrated in Figure 4.

Starting with step 401, the insertion location tracking module 203 initially begins a threshold timer. This threshold timer may be, for example, for a period of 100 milliseconds. As will be apparent from the following explanation, the threshold timer determines how often the insertion location tracking module 203 samples the characteristics of received messages containing insertion location status information, such as event messages from the Microsoft Active Accessibility application user interface 213. Next, in step 403, the retrieval thread 301 retrieves (or receives) an insertion location message from the Microsoft Active Accessibility application programming interface 213. In step 405, the retrieval thread 301 places the received insertion location message in the event message queue 303.

In step 407, the timing thread 305 determines whether or not the threshold time has expired. If the threshold time has now expired, then the retrieval thread 301 continues to receive insertion location messages and store the received messages and the event messages queue 303. If, however, the timing thread 305 determines that the threshold time has expired, then in step 409 the timing thread 305 retrieves the most recently-stored insertion location messages from the event messages queue 303. The insertion location tracking module 203 then analyzes the relevant characteristic information contained in the retrieved insertion location messages, and provides that information to the user interface determination module 205. Thus, rather than attempting to analyze the characteristic information from each received insertion location message, the insertion location tracking module 203 periodically analyzes the characteristic information in the most recently-received insertion location message. It should be noted that, while the retrieval and storage of incoming insertion location messages is described as being part of the same process as the sampling of stored insertion location messages, the timing thread 305 may be different than the retrieval thread 301 for various embodiments of the invention. If the threads are different, then the retrieval thread 301 may continue to receive and store incoming insertion location messages concurrently with the timing thread 305 sampling stored insertion location messages from the event queue 303.

With various embodiments of the invention, specific changes in the status of the insertion location may temporarily suspend the queuing process. For example, for some embodiments of the invention, the queuing process will temporarily be suspended when the data input focus changes from one user interface to another user interface. This temporary suspension of the queuing process allows the data entry user interface panel to be immediately hidden with regard to the user interface losing data entry focus, and immediately shown with regard to the user interface gaining data entry focus.

Also, with some embodiments of the invention, one or both of the threads 301 and 305 may be an "in-process" thread. More particularly, the thread may be provided by the software application process which also provides the user interface in which the insertion location is positioned. As will be appreciated by those of ordinary skill in the art, the use of in-process threads may allow the thread to more easily translate the characteristic information relating to the status of the insertion location provided by the application process, as the thread is part of the application process itself. Alternately, one or both of the threads 301 and 305 may be an "out-of-process" thread separate from the application process maintaining the user interface with the insertion location. For example, one or both of the threads may be provided by a software system hosting the application, such as an operating system. As will also be appreciated by those of ordinary skill in the art, the use of an out-of-process thread allows for greater operating freedom, as this type of thread is not constrained by rules governing the operation of the application. Further, this type of thread will not suddenly cease operating if the application is inadvertently closed.

It should be appreciated that other embodiments of the invention may employ different techniques to efficiently capture the characteristic information contained in a series of insertion location messages. For example, with some embodiments of the invention, the insertion location tracking module 203 may use one or more threads to process the characteristics information contained in each received insertion location message. If the thread or threads begin to fall behind in processing the insertion location messages, then the thread or threads will discontinue processing the outstanding insertion location messages and process only the most recently received insertion location message until catching up with the current status of the insertion location. Alternately, some embodiments of the invention may simply monitor changes in the characteristics information provided by the insertion location messages. For example, with a large number of a serial messages relating to the status of an insertion point caret, typically only the position information will change, and the characteristic information relating to the control or user interface in which the insertion point caret is located will remain constant. The position information can be easily processed by the insertion location tracking module 203. While changes to the characteristic information relating to the control or the user interface require significantly more processing overhead, as these changes occur relatively infrequently, they may be processed only when a change in these characteristics is noted. Still further, some embodiments of the invention may process a batch of insertion location messages at one time, to identify the current status of the insertion location based upon the event order of the messages and the characteristics of the most recently received message. Of course, still other techniques may be employed to obtain insertion location characteristic information from insertion location messages.

As previously noted, the user interface determination module 205 employs the insertion location characteristic information obtained from the insertion location messages to control the operation of a user interface, such as a data entry user interface. For example, the insertion location characteristics information may provide a position of an insertion point caret in X and Y coordinates. The user interface determination module 205 may then instruct the user interface application programming interface 211 to position the user interface proximal to the position of the insertion point caret. Still other applications of the insertion location characteristics information to control operation of a user interface will be discussed in more detail below.

In addition to monitoring insertion location messages, the insertion location tracking module 203 may also monitor other types of messages according to various embodiments of the invention. For example, with some embodiments of the invention, the insertion location tracking module 203 may monitor the status of focus change event messages, indicating win the input focus for an application changes. The user interface determination module 205 may employ the focus change information to, for example, change the visibility of the user interface. Additionally, in some situations, insertion location tracking messages may erroneously continue to be generated that indicate an insertion location is located in a user interface that no longer has input focus. Accordingly, the insertion location tracking module 203 may employ information provided by focus change event messages to weed out erroneous insertion location characteristics information.

Various embodiments of the invention may alternately or additionally monitor the start and finish of movement or resizing processes upon the boundaries of an application user interface (such as the movement or resizing of a windowed user interface). With some embodiments of the invention, it may be difficult for the tool 201 to process the characteristics information from the insertion location messages sufficiently fast to, for example, maintain the position of a data entry user interface relative to the position of the insertion location while the application user interface containing the insertion location is being moved or resized. Accordingly, the tool 201 may note an event message indicating the start of movement or resizing of an application user interface, and discontinue displaying the data entry user interface in response. When the tool 201 then notes an event message indicating that the movement or resizing of the application user interface has ended, the tool 201 may then again display the data entry user interface.

Still further, some embodiments of the invention may monitor the status of menus in an application user interface, or other logical operations within a user interface that affect the state of the insertion location, but do not trigger a change in insertion location characteristics for insertion location messages. For example, if a fixed menu in an application user interface is activated, the insertion point may continue to be displayed in the menu. The application user interface, however, will not accept input data while the insertion point is in the fixed menu: Accordingly, the user interface determination module 205 may discontinue displaying the data input panel user interface while the insertion point is located and the fixed menu. Of course, still other embodiments of the invention may monitor and respond to yet other event messages relating to the status of an application or system hosting an application.

### Behavior Of The Data Entry User Interface

### Overview

As previously noted, an insertion location tracking tool according to various embodiments of the invention may be used to control any characteristic of a data entry user interface. For example, a tool according to some embodiments of the invention may control both the location and appearance of a user interface, such as a data input panel, based upon the status of an insertion location. The implementation of these particular features according to various environments of the invention will be discussed in detail below.

### Positioning Of The User Interface

One feature of an insertion location control tool 201 according to various embodiments of the invention is the ability to position a data entry graphical user interface, such as a data input panel, anywhere in a work space based upon the position characteristics of an insertion location. With some embodiments of the invention, the work space may be any space displayed to a user. Alternately, the work space may be any space in which the data entry graphical user interface can receive input data from a user. For example, if the data entry graphical user interface receives input data through the movement of a stylus 166 across a surface of a digitizer 165, then the work space may be the space corresponding to the portion of the surface that can detect movement of the stylus 166.

Thus, the insertion location control tool 201 according to some embodiments of the invention can position a data entry graphical user interface close to the control into which data from the user interface will be inserted. For example, if the control is an edit control, some embodiments of the insertion location control tool 201 can position a data entry user interface close to the edit control, so that the user can simultaneously view both the user interface and the entry of data into the control. This feature is particularly useful when, for example, the user is employing the data entry user interface to enter data into a variety of edit controls spread out over a wide area, such as a form.

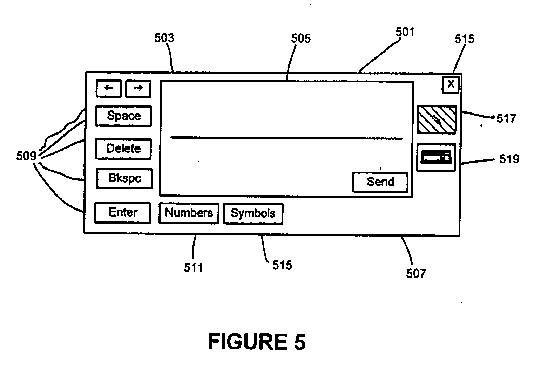

Figure 5 illustrates one type of data entry graphical user interface that might be employed to enter data into controls of an application user interface. The data entry graphical user interface, referred to here as a data input panel 501, includes a boundary 503. Inside the boundary 503 is a writing surface 505. As will be appreciated by those of ordinary skill in the art, a user may write electronic ink onto the surface 505 using a suitable pointing device, such as a stylus 166. The electronic ink may be recognized as text before insertion into an application's user interface, or it may be directly entered into an application in the form of electronic ink. (With some data input panels according to embodiments of the invention, a writing surface may only generate electronic ink in response to contact from a stylus.) With various embodiments of the invention, particular gestures made with the stylus may alternately be recognized as commands to perform some function. The data input panel 501 also includes a send button 507, a plurality of control buttons 509, and supplemental interface buttons 511 and 513.

After the user has written electronic ink onto the writing surface 505, the data input panel 501 will convert the electronic ink into text after a predetermined period. If, however, the user wishes to speed up the recognition process, the user may activate the send button 507 using a pointing device. Once text is recognized from the electronic ink, it typically is inserted into an application at an insertion location. In addition to inserting recognized text at an insertion location, the user may perform non-character actions at the insertion location as well, using the control buttons 509. Further, using the control buttons 509, a user may move an insertion point forward or backward through existing text, delete, backspace, and create a carriage return.

As will be explained in more detail below, activation of the supplemental interface buttons 511 and 513 command the data input panel 501 to display supplemental soft keyboards containing number and symbols, respectively, while activating the close button 515 will close the data input panel 501. The data input panel 501 also includes surface selection buttons 517 and 519. As will also be discussed in detail below, the surface selection buttons allow a user to switch between data input surfaces displayed by the data input panel 501. In Figure 5, the writing surface button 517 is activated, prompting the data input panel 501 to display the writing surface 505.

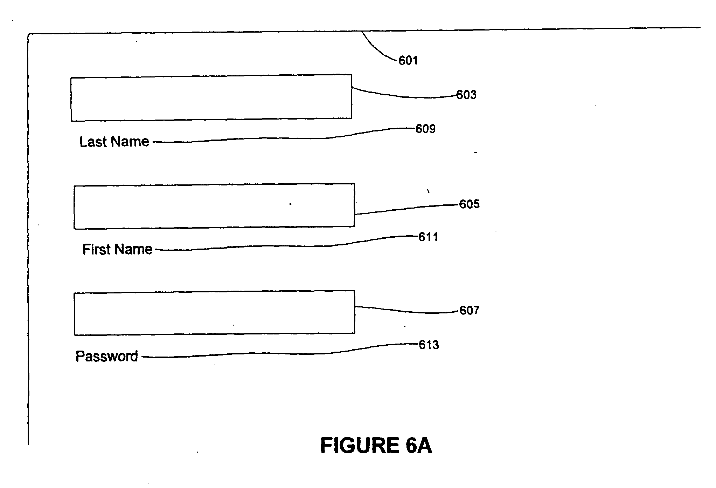

Figure 6A illustrates one example of a graphical user interface for application. As seen in this figure, the workspace on which the graphical user interface of the application is displayed has a boundary 601. As previously noted, the boundary 601 may be the edge of a display area. Alternately, the boundary 601 may be the edge of a displayed space corresponding to an area that can accept input data for the data entry user interface. As also seen in this figure, the user interface of the application includes three edit controls 603-607, which are each bounded by a bounding box. Below each bounding box is a title 609-613, identifying the data that is to be entered into the associated edit control 603-607, respectively. Thus, the user interface for the application illustrated in Figure 6A might be, for example, a form rendered on a computer requesting personal information from the user.

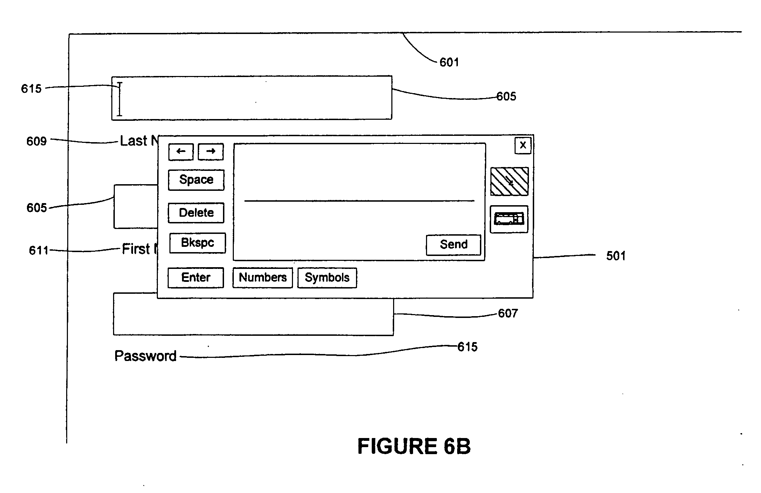

When the user wishes to insert data into an edit control, the user first establishes an insertion location in the edit control using, for example, a pointing device such as a stylus or mouse. Turning now to Figure 6B, for example, a user wishing to insert data into the edit control 603 establishes an insertion point 615 within the boundaries of the edit control 603. Typically, placing an insertion point within an edit control causes the operating system of the computer to shift the input focus to that edit control. That is, the operating system recognizes that future data input by a user will be delivered to that edit control. As discussed in detail above, the insertion location tracking module 203 detects the change in status of the insertion point 615.

More particularly, the insertion location tracking module 203 detects a focus change message indicating that the application providing the control 605 now has focus. Further, the insertion location tracking module 203 determines that the insertion point 615 is located within the control 605, and the position of the insertion point within the work space 601 (or within the control 605). In response to determining the status of the insertion point, the user interface determination module 205 according to various embodiments of the invention instructs the user interface application programming interface 211 to display the data input panel 501 for entering data into the edit control 605. As will be discussed in detail below, the characteristics of the shared graphical user interface will vary depending upon the data provided by the object controlling the user interface.

With some embodiments of the invention, the user interface determination module 205 may instruct the user interface application programming interface 211 to display the data input panel 501 whenever the user places the insertion location within an edit control. With alternate embodiments of the invention, however, the user interface determination module 205 may instruct the user interface application programming interface 211 to display the data input panel 501 only in response to the user positioning the insertion location within a control using a stylus. By providing the data input panel 501 only when the insertion point 615 is positioned with a stylus pointing device, the user interface determination module 205 prevents the data input panel 501 from being displayed when the user is employing a different data entry tool, such as a keyboard or mouse. Thus, the data input panel 501 will be displayed only when needed to actually enter data into a control.

When the insertion location tracking module 203 determines that the edit control 605 is receiving input focus, the user interface determination module 205 may instruct the user interface application programming interface 211 to display the data input panel 501 at a specific location relative to the edit control 605. For example, the user interface determination module 205 can specify a vertical offset between the closest horizontal boundary edge of the data input panel 501 and the closest horizontal boundary edge of the edit control 605. Similarly, the user interface determination module 205 can specify a horizontal offset between the closest vertical boundary edge of the data input panel 501 and the closest vertical boundary edge of the edit control 605. With some embodiments in of the invention, the user interface determination module 205 may even specify a height and width of the data input panel 501, to ensure that it fits within the prescribed work space while remaining close to the relevant edit control.

In the illustrated embodiment, if space is available within the work space boundary 601, then the user interface determination module 205 instructs the user interface application programming interface 211 to display the data input panel 501 below and shifted toward the right of the boundary of the edit control 605. For example, the user interface determination module 205 may direct the user interface application programming interface 211 to position the upper boundary of the data input panel 501 the pixel equivalent of .25 inches below the lower boundary of the edit control 605. Similarly, the user interface determination module 205 may direct the user interface application programming interface 211 to position the left vertical boundary of the data input panel 501 the pixel equivalent of 1/16 of an inch to the right of the left vertical boundary of the edit control 605.

This position arrangement is particularly convenient when the application is displaying a form with a variety of edit controls. By placing the data input panel 501 below and slightly shifted toward the right of the edit control 603, the data input panel 501 remains close to the edit control 605, but does not obscure the user's view of text entered into the edit control 605. This positioning also allows the user to view at least a portion of the edit control 605 directly below the edit control 605, so that the user does not forget to enter data into the edit control 605 as well. Additionally, the edit control 605 is partially visible so that the user can target the control using the stylus to move the input focus to edit control 605. Moreover, if the title 609 associated with a the edit control 605 is left-justified, then the right-shifted position of the data input panel 501 will also allow the user to view at least the first letters of the title 609,and thus will assist the user in remembering what data should be entered into the edit control 605.

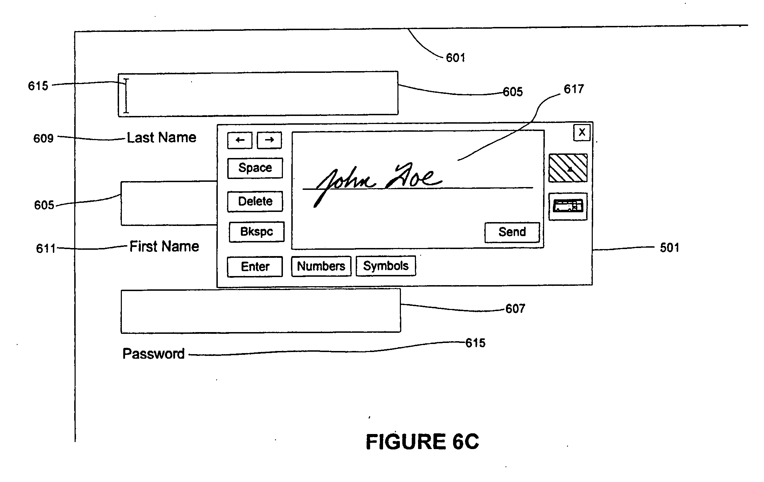

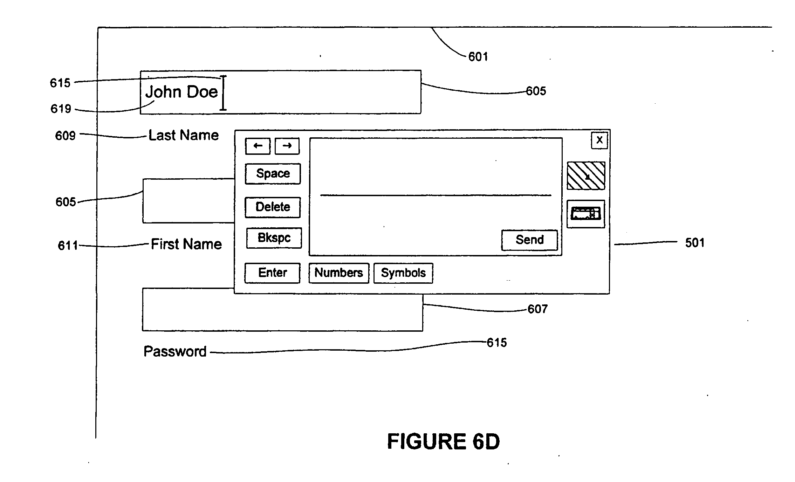

Once the data input panel 501 is displayed, the user can employ the writing surface of the data input panel 501 to enter text into the edit control 605. For example, as illustrated in Figure 6C, the user might handwrite the name "John Doe" in electronic ink 617 onto the writing surface. After a predetermined amount of time, or if the user activates the send button 507, the data input panel 501 recognizes text from the ink 617. Then, as shown in Figure 6D, the data input panel 501 inserts the recognized text 619 into the edit control 605.

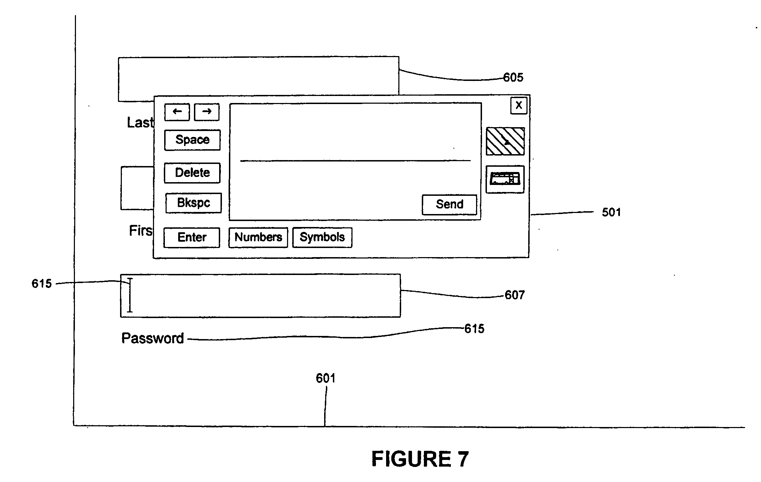

With various embodiments of the invention, the user interface determination module 205 can even compensate for situations where the default position of the data input panel 501 cannot be used without obscuring the associated edit control. For example, as shown in Figure 7, the data input panel 501 is being used to insert text into the edit control 607. Because the edit control 607 is just above the boundary 601 of the work space, the data input panel 501 cannot be inserted below the edit control 607. In this situation, the user interface determination module 205 may instruct the user interface application programming interface 211 to render the data input panel 501 at a position above and shifted toward the right of the edit control 607. More particularly, the user interface determination module 205 may provide the user interface application programming interface 211 with a negative vertical offset, thereby placing the data input panel 501 above the edit control 607.

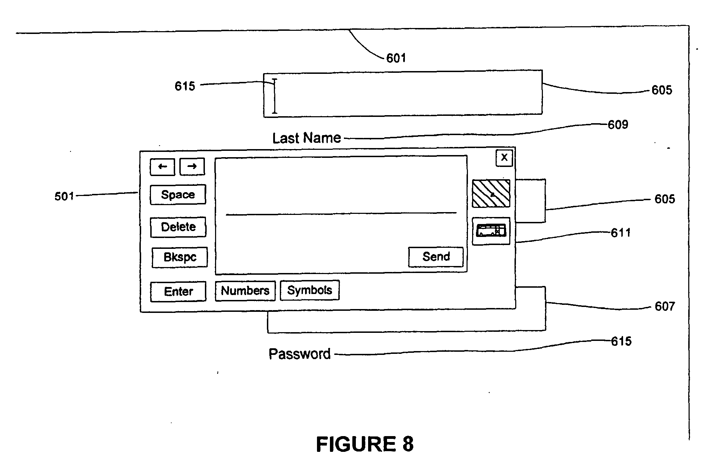

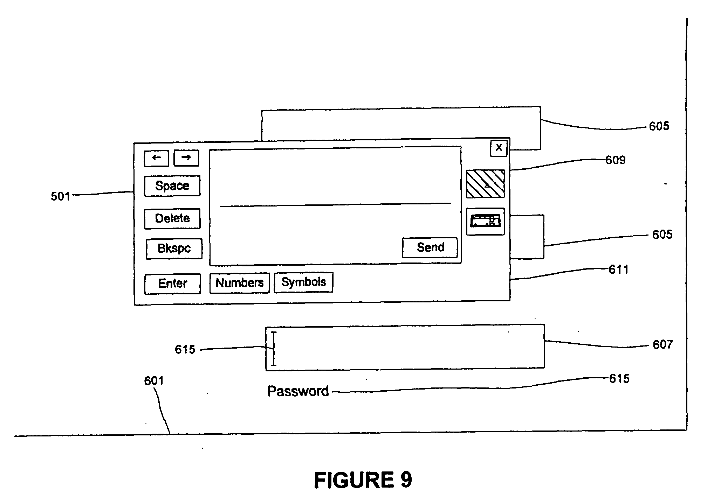

Similarly, if there is insufficient room to display the data input panel 501 shifted toward the right of an edit control, then the user interface determination module 205 may instruct the user interface application programming interface 211 to render the data input panel 501 so that it is shifted toward the left of the edit control. For example, as illustrated in Figure 8, the edit control 605 is too close to the vertical portion of the work space boundary 601 to display the data input panel 501 shifted toward the right of the edit control 605. Instead, the user interface determination module 205 instructs the user interface application programming interface 211 to place the data input panel 501 shifted toward the left of the edit control 605. That is, the user interface determination module 205 provides the user interface application programming interface 211 with a negative horizontal offset value. Thus, the data input panel 501 will not completely obscure the underlying edit control 605. Also, if an application contains edit controls along the right-hand side of its user interface, then right-justified titles for these edit controls will still be partially visible to a user employing the data input panel 501 according to these embodiments of the invention. Likewise, if there is insufficient room to display the data input panel 501 below and shifted toward the left of the edit control, then the user interface determination module 205 may instruct the user interface application programming interface 211 to display the data input panel 501 above and shifted toward the left of the edit control, as illustrated in Figure 9.

In some instances, a user may wish to employ a data input panel 501 in order to enter data into a multi-line edit control. According to various embodiments of the invention, the data input panel 501 may be positioned relative to a multi-line edit control in a similar fashion to its position relative to a single line edit control as described above. If the multi-line edit control is too large to allow the data input panel 501 to be positioned above or below the multi-line edit control, however, then the user interface determination module 205 may instruct the user interface application programming interface 211 to position the data input panel 501 within the edit control itself. For example, if the insertion point 615 is located in the upper half of the multi-line edit control (or, alternately, in the upper half of the work space), then the user interface determination module 205 may instruct the user interface application programming interface 211 to position the data input panel 501 at the lowermost portion of the multi-line edit control (or at the lowermost available position in the work space).

Similarly, if the insertion point 615 is positioned in the lower half of the multi-line edit control (or, alternately, in the lower half of the work space), then the user interface determination module 205 may instruct the user interface application programming interface 211 to position the data input panel 501 at the uppermost portion of the multi-line edit control or the uppermost available position in the work space. As will be appreciated by those of ordinary skill in the art, however, it is beneficial to minimize the movement of the data input panel 501 during use, in order to avoid confusing the user or disrupting the user's work flow and entry of data. Accordingly, various embodiments of the invention will reposition the data input panel 501 only when the user relocates the insertion point 615 from the upper half of the multi-line edit control to the lower half of the multi-line edit control, or vice versa.

### Appearance Of The User Interface

In addition to specifying the size and position of a data entry graphical user interface, the user interface determination module 205 according to various embodiments of the invention may also specify the appearance of a data entry graphical user interface. Thus, the user interface determination module 205 according to various embodiments of the invention can determine the features that will be included in a displayed data input panel 501.

Returning now to Figure 5, the data input panel 501 can provide two or more different data input surfaces, as previously noted. When the data input panel 501 displays the writing surface 505 as shown in that figure, the data input panel 501 generates electronic ink corresponding to the motion of a stylus across the writing surface 505. If, on the other hand, the data input panel 501 displays a keyboard surface, then the data input panel 501 will generate a character of text corresponding to each key activated on the soft keyboard. As previously noted, a user can toggle back and forth between these surfaces by activating the surface buttons 517 and 519. With various embodiments of the invention, however, the user interface determination module 205 can specify that a data input panel 501 initially display a particular surface when the input focus is shifted to a control.

For example, an application may include an edit control for receiving a random combination of numbers and letters, such as a password or product model number. With this type of data, the writing surface 505 may not be the most suitable surface for entering the data. Many handwriting recognizers have difficulty recognizing random characters. Further, many password edit controls do not accurately display their data, but instead display only a single character, such as "*", to prevent a bystander from inadvertently viewing a user's password. Thus, if the user's handwriting is being inaccurately recognized, the user cannot even view the recognition results to determine which character or characters are being incorrectly recognized. With various embodiments of the invention, when the insertion location tracking module 203 determines that the insertion location is located within this type of control, the user interface determination module 205 may instruct the user interface application programming interface 211 to initially display the keyboard surface, as it provides the user with a more reliable technique for entering assorted numbers and letters.

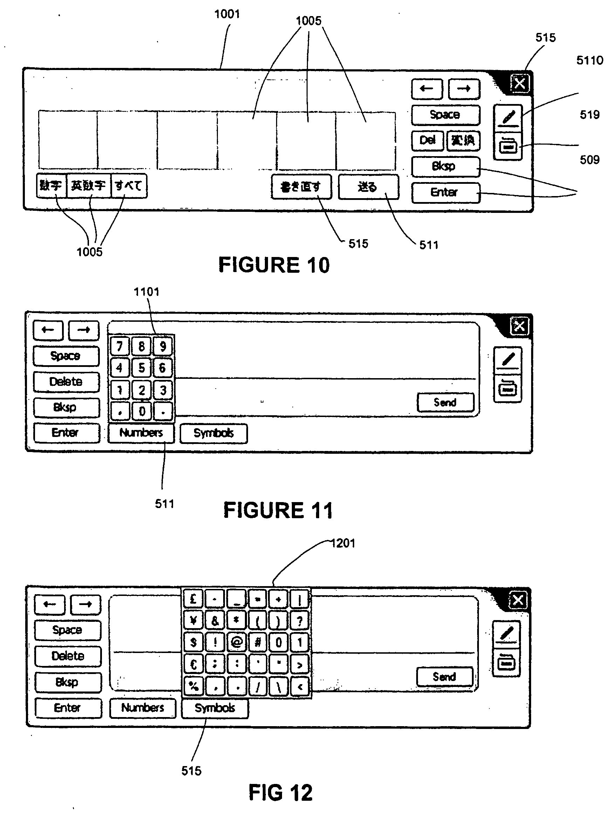

In addition to specifying the initial display of the writing surface 505 or the keyboard surface, the user interface determination module 205 may specify the initial or permanent display of any surface that can be displayed by the shared component. For example, Figure 10 illustrates a data input panel 1001 for use by Asian language users. Instead of the writing surface 505 with a single area, the writing surface of this data input panel 1001 simultaneously displays multiple writing areas 1003, so that a user can write a single Asian-language character in each area 1003. Thus, if the insertion location tracking module 203 detects that the insertion location is located in an edit control configured to receive data in the form of Asian language characters, then the user interface determination module 205 can specify that the user interface application programming interface 211 initially display the Asian language data input panel 1001. It should be noted that the Asian language writing surface can be included in data input panel 501 in addition to the Latin language writing surface 505. Thus, with some embodiments of the invention, a user may toggle between the Asian language writing areas 1003, the Latin language writing surface 505, and the keyboard surface.

Of course, still other embodiments may employ any number of different specialized surfaces. For example, if the insertion location tracking module 203 detects that the insertion location is within an edit control in a browser configured to receive universal resource locator addresses, then the user interface determination module 205 may specify the display of a soft keyboard containing keys for the character strings "www.," ".com," ".net," ".org" and ".gov." Likewise, the user interface determination module 205 can specify the display of a surface having partitioned writing areas for Latin language users in order to, for example, assist the data input panel 501 in better recognizing random characters in a password or part model number. Also, the user interface determination module 205 according to various embodiments of the invention can specify that a user interface include a surface that collects electronic ink without converting the electronic ink into text. This type of surface may be useful when, for example, capturing a user's original signature.

It should be noted that the data entry user interfaces employed by the various embodiments of the invention may implemented from any desired source. For example, different surfaces for a user interface may be provided by a user interface application programming interface that renders a user interface in response to instruction from a user interface determination module. Alternately, the user interface determination module may provide one or more surfaces to the user interface application programming interface. Still further, an application may provide one or more surfaces to a user interface determination module, which can then provide the surfaces to the user interface application programming interface. With some embodiments of the invention, the user interface application programming interface may be an executable component, that instantiates the user interface itself. Still further, some embodiments of the invention may omit a user interface application programming interface altogether. With these embodiments, the user interface determination module may render the data entry graphical user interface itself.

In addition to specifying the display of interface surfaces, with various embodiments of the invention the insertion location control tool 201 may specify that the data entry user interface initially or permanently display any feature. For example, the data input panel 501 contains supplemental keyboard buttons 511 and 513. When the supplemental keyboard button 511 is activated, the data input panel 501 displays a supplemental keyboard 1101 containing numbers 0-9, the "," character and the "." character, as shown in Figure 11. Similarly, when the supplemental keyboard button 517 is activated, the data input panel 501 displays a supplemental symbol keyboard 1201 that contains keys for a variety of symbols, as shown in Figure 12. With various embodiments of the invention, the insertion location control tool 201 may specify that a data input panel 501 be capable of displaying or not displaying either of these buttons, or any additional supplemental display that might be convenient to a user, depending upon the status of the insertion location.

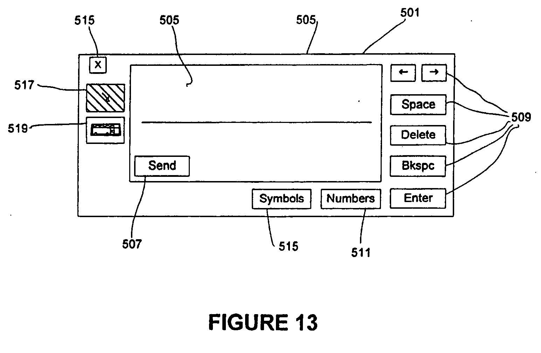

Further, the insertion location control tool 201 according to various embodiments of the invention may simply define the arrangement of components within a data entry user interface. For example, the features of the data input panel 501 shown in Figure 13 are reversed from those in the data input panel 501 shown in Figure 5. Typically, this arrangement is based upon a user's preference in writing with the right hand or the left hand. This arrangement may also be specified by the user interface determination module 205, however. Additionally, the insertion location control tool 201 may designate the use of a factoid or other heuristics, based upon the detected status of the insertion location, to bias the handwriting recognition of the data input panel to improve its accuracy for a particular control. For example, if the insertion location tracking module 203 determines that the insertion location is positioned within a control for receiving a user's age, the user interface determination module 205 may specify that the user interface application programming interface 211 use a factoid that biases the data input panel to recognize input electronic ink as numbers rather than letters.

It should be noted that, with some embodiments of the invention, the user interface determination module 205 may provide a portion of or the entire interface to the user interface application programming interface 211 for display to a user. Alternately the insertion location control tool 201 may provide the characteristics for a data entry user interface to the user interface application programming interface 211. That is, the user interface determination module 205 provides predetermined values to the user interface application programming interface 211, and the user interface application programming interface 211 then renders a previously stored user interface based upon those characteristics.

For example, with some embodiments of the invention, the user interface determination module 205 may provide the user interface application programming interface 211 with a height value, a width value, a horizontal offset value, and a vertical offset value. As noted above, the user interface application programming interface 211 may provide the horizontal offset and vertical offset values to the user interface application programming interface 211 to define the position of the data input panel relative to an edit control containing the insertion point. The default for the horizontal offset value may be, for example, the pixel equivalent of 1/16 of an inch, while the default for the vertical offset value may be the pixel equivalent of .25 inches. The height value then provides the user interface application programming interface 211 with the height of the text panel user interface. With various embodiments of the invention, the default for the height property may be, for example, 157 pixels for a display with 96 dpi, 196.25 pixels for a display with 120 dpi, and 217.51 pixels for a display with 133 dpi, in order to maintain a consistent apparent size of the panel for a variety of display resolutions. Similarly, the width value then provides the user interface application programming interface 211 with the width for the data input panel. With some embodiments of the invention, the default for the width property may be 570 pixels for a display with 96 dpi, 712.5 pixels for a display with 120 dpi, and 789.7 pixels for a display with 133 dpi, in order to maintain a consistent apparent size of the panel for a variety of display resolution.

The user interface determination module 205 may further include a left value, which provides the user interface application programming interface 211 with the horizontal location of the left edge of the data input panel, and a top value that provides the user interface application programming interface 211 with the vertical location of the top edge of the data input panel. The user interface determination module 205 may also include a visible property, which retrieves or sets the visible state of the input panel. Thus, if the insertion location tracking module 203 determines that the insertion point status is such that an application may not receive input data (for example, the insertion point is positioned within a previously fixed menu list), the user interface determination module 205 can change the visible value to have the user interface application programming interface 211 hide the input panel.

In addition to the properties listed above, it should be appreciated that the insertion location control tool 201 according to various embodiments of the invention may specify any desired property for establishing the characteristics of a data entry graphical user interface base upon the status of the insertion location. For example, the insertion location tracking module 203 may specify a the use of one or more recognition context characteristics for a user interface, such as a particular recognition dictionary, factoid heuristics for biasing recognition of input handwriting, the use of a specific recognition engine, either generally or for recognizing text being inserted into a specific control, or instructions for the user interface to perform background recognition of input handwriting without waiting for a user to stop entering new handwriting. Further, the insertion location tracking module 203 may specify a property for the user interface that causes the user interface to use an assigned recognition timeout value for returning recognized text, a particular electronic ink thickness or color, and highlights desired keys on a keyboard surface. Properties or methods specified by the insertion location control tool 201 may further allow an input panel to insert ink directly into a control, or to access ink that has already been inserted into a control. The insertion location control tool 201 may also force a data input panel to display multiple lines on a writing surface or determine whether a user may voluntarily close the data input panel.

Also, in addition to the properties listed above, the insertion location control tool 201 according to various embodiments of the invention may instruct the user interface application programming interface 211 to perform various actions. For example, the insertion location control tool 201 may instruct the user interface application programming interface 211 to immediately perform handwriting recognition on any pending handwriting, and then send the recognition result to the edit control containing the insertion location. The insertion location control tool 201 may utilize this action when, for example, the insertion location tracking module 203 detects that the insertion location has been moved out of its existing control, or when the insertion location tracking module 203 detects that the application is being shut down.

Further, if the insertion location control tool 201 is being employed with an operating system that provides a text services framework, such as the Microsoft WINDOWS® brand XP Tablet PC Version operating system, then the insertion location control tool 201 may enable the text services framework when the insertion location tracking module 203 determines that the insertion location is positioned in a rich edit control or an ink edit control (that is, with an edit control that supports the text service). As known to those of ordinary skill in the art, a text services framework can associate various metadata with text. For example, if the text were recognized from handwriting or speech, then that text will have alternate recognition selections. If an application supports a text services framework, then when the application receives text, it will also receive and maintain any metadata associated with that text. Accordingly, the insertion location control tool 201 may instruct the user interface application programming interface 211 to start the applicable text services framework (such as the Common Text Framework used with Microsoft WINDOWS® brand XP Tablet PC Version operating system) on the attached control.

As well as providing correction functionality, the text services framework can also be used to ensure that recognized input data is accurately matched with its destination edit control. More particularly, when a rich edit control or ink edit control invokes the Common Text Framework, the Common Text Framework creates metadata for subsequently recognized text that associates the recognized text with the control. Thus, even after the input focus has shifted from the control, the Common Text Framework can match recognized text with the control and ensure that the recognized text is inserted into the control. It should be noted, however, that with the Common Text Framework, the insertion location control tool 201 may need to ensure that the rich edit control is provided with a message instructing the rich edit control to request an OLE interface to the Common Text Framework (that is, the rich edit control must ask for a pointer to a COM interface to access COM features.

### Invocation Of The Data User Interface

In addition to determining the appearance or other properties of a user interface such as a data entry user interface, the insertion location characteristics or other event information may' also be employed to control how a user interface is invoked. For example, with some embodiments of the invention, the insertion location tracking module 203 may monitor event messages relating to the position of a stylus 165 relative to the surface of a digitizer 166. Based on this information, the tool 201 may determine whether the stylus or pen is hovering within a bounding area associated with the control containing the insertion location. In response, the user interface determination module 205 may instruct the user interface application programming interface 211 to display or hide the data entry user interface automatically, according to whether the pen is hovering inside or outside of the bounding area. This bounding area could be contiguous with the exact boundary of the control, or could alternately cover a larger area such that the pen only need come close to the visible control boundary.

Still further, as the pen moves into range of the control containing the insertion location, the user interface determination module 205 may instruct the user interface application programming interface 211 to display the data entry user interface immediately, or after a small delay. The delay would allow a user to drag the pen through or over the control containing the insertion location when targeting other adjacent controls, so that the data entry user interface is only displayed when the user explicitly indicates a desire to access the data entry user interface by momentarily holding the pen inside or above the control with the insertion location. With alternate embodiments of the invention, the user interface determination module 205 may instruct the user interface application programming interface 211 to display a data entry user interface only when a pen what is in range of the entire display area, such that the data entry user interface is only visible when the pen is in range of the entire screen.

According to still other embodiments of the invention, the user interface determination module 205 may create a data entry user interface display target when the insertion location is positioned within certain types of controls, or when the insertion location is a particular type. For example, if the insertion location is an insertion point, then a user has probably positioned the insertion point to add text after the insertion point. Accordingly, the user interface determination module 205 may immediately present the user with a data input panel, on the assumption that the user wants access to the data input panel to insert new text. If, however, the insertion location is a selection of existing text, then the user may simply want to delete or copy the text, or replace the selected text with another set of text that has already been copied. According, the user interface determination module 205 may not immediately present the user with the data input panel, but may instead provide the user with a target for accessing the data input panel at a later time. Thus, an immediate display of the data input panel will not interfere with the user's work flow if the user only wishes to delete, copy or replace the selected text with previously copied text.

Further, the user interface determination module 205 may monitor event messages relating to the location of a pen or stylus (or other suitable pointing device) to determine when the pen or stylus (or other pointing device) was moved over or, with some embodiments, proximal to, the data entry user interface and display target. In response, the user interface determination module 205 could instruct the user interface application programming interface 211 to display the data entry user interface only while the pen (or other pointing device) was positioned over (or proximal to) the target or data entry user interface. With some embodiments of the invention, for example, the data entry user interface display target may take the form of a rectangle, circle, or any other geometric shape, and may be positioned above, below, left, right, and/or overlapping the control containing the insertion location. Again, the target may be displayed immediately or after a delay, and then the data entry user interface may be displayed immediately or after a delay.

### Conclusion

While the invention has been described with respect to specific examples including some specific modes of carrying out the invention, those skilled in the art will appreciate that there are numerous variations and permutations of the above described systems and techniques. Thus, the spirit and scope of the invention should be construed broadly as set forth in the appended claims.

## Claims

1. A method of controlling a data entry user interface, comprising:
obtaining characteristics of an insertion location for controlling a data entry user interface; and
controlling a data entry user interface based upon the obtained characteristics of the insertion location.

2. The method recited in claim 1, further comprising:
determining from the obtained characteristics of the insertion location that the insertion location is located within an edit control for receiving a random arrangement of characters; and
providing a data entry user interface with a keyboard surface for entering a random arrangement of characters.

3. The method recited in claim 1, further comprising:
determining from the obtained characteristics of the insertion location that the insertion location is associated with a language type; and
providing a data entry user interface with a writing surface for receiving electronic ink written in the language type.

4. The method recited in claim 1, further comprising:
receiving a plurality of insertion location messages, each message containing characteristics of the insertion location; and
obtaining the characteristics for controlling from at least one of the plurality of insertion location messages.

5. The method recited in claim 4, further comprising:
storing each of the received plurality of insertion location messages; and
periodically sampling an insertion location message from the plurality of stored insertion location messages.

6. The method recited in claim 5, further comprising:
employing a first programming thread to store each of the received plurality of insertion location messages; and
employing a second programming thread to periodically sample an insertion location message from the plurality of stored insertion location messages.

7. The method recited in claim 6, further comprising:
displaying the data entry user interface for the insertion of data into a software application process being hosted by a software system process; and
employing a thread maintained by the software application process as the first thread.

8. The method recited in claim 6, further comprising:
displaying the data entry user interface for the insertion of data into a software application process being hosted by a software system process; and
employing a thread maintained by the software application process as the second thread.

9. The method recited in claim 6, further comprising:
displaying the data entry user interface for the insertion of data into a software application process being hosted by a software system process; and
employing a thread maintained by the software system process as the first thread.

10. The method recited in claim 6, further comprising:
displaying the data entry user interface for the insertion of data into a software application process being hosted by a software system process; and
employing a thread maintained by the software system process as the second thread.

11. The method recited in claim 4, further comprising:
monitoring the characteristics of the insertion location included with each of the received plurality of insertion location messages; and
controlling the data entry user interface based upon changes in the characteristics of the insertion location included with the received plurality of insertion location characteristics.

12. The method recited in claim 4, further comprising:
monitoring the characteristics of the insertion location included with each of the received plurality of insertion location messages;
determining current characteristics of the insertion location based upon an order in which the insertion location messages were issued; and
controlling the data entry user interface based upon the determined current characteristics of the insertion location characteristics

13. The method recited in claim 1, further comprising:
displaying the data entry user interface for the insertion of data into a software application process being hosted by a software system process; and
wherein the characteristics of the insertion location are provided by the software application process.

14. The method recited in claim 1, further comprising:
displaying the data entry user interface for the insertion of data into a software application process being hosted by a software system process; and
wherein the characteristics of the insertion location are provided by the software system process.

15. The method recited in claim 1, further comprising:
displaying the data entry user interface for the insertion of data into a software application process being hosted by a software system process;
receiving a focus message relating to a data input focus state of the software application process; and
further controlling the operation of the data entry user interface based upon the received focus message.

16. The method recited in claim 1, further comprising:
displaying the data entry user interface for the insertion of data into a software application process being hosted by a software system process;
receiving an application user interface message relating to an application user interface state of an application user interface provided by the software application process; and
further controlling the operation of the data entry user interface based upon the received application user interface message.

17. The method recited in claim 1, wherein the characteristics of the insertion location include position information for the insertion location.

18. The method recited in claim 1, further comprising:
displaying the data entry user interface for the insertion of data into a software application process being hosted by a software system process; and
wherein the characteristics of the insertion location include application user interface information identifying an application user interface information in which the insertion location is located.

19. The method recited in claim 1, wherein the language type is alphanumeric.

20. The method recited in claim 1, wherein the language type is pictographic.

21. The method recited in claim 1, further comprising:
determining from the obtained characteristics of the insertion location that the insertion location is proximal to a boundary of a work space; and
rendering the data entry user interface at a position such that the data entry user interface remains within the boundary of the work space.

22. The method recited in claim 1, further comprising:
determining from the obtained characteristics of the insertion location that the insertion location is proximal to a boundary of a work space; and
rendering the data entry user interface with a size such that the data entry user interface remains within the boundary of the work space.

23. The method recited in claim 1, further comprising:
determining from the obtained characteristics of the insertion location that the insertion location is within an edit control for receiving an Internet universal resource address location; and
providing the data entry user interface with a keyboard surface having dedicated keys for one or more of the character strings in the group consisting of "www", "org", "com", "net" and "gov".

24. The method recited in claim 1, further comprising:
determining from the obtained characteristics of the insertion location that the insertion location is within an edit control for receiving numeric data; and
providing the data entry user interface with a keyboard surface having numeric keys.

25. The method recited in claim 1, further comprising:
determining from the obtained characteristics of the insertion location that the insertion location is within an edit control for receiving numeric data; and
providing the data entry user interface with button that, when activated, provides a keyboard surface having numeric keys.

26. A method of controlling a data entry user interface, comprising:
determining a status of an insertion location; and
providing an invocation interface for invoking a data entry user interface based upon the determined status of the insertion location.

27. The method recited in claim 26, further comprising:
providing a target invocation interface, such that a data entry user interface is invoked in response to a pointing device passing over the target invocation interface.

28. The method recited in claim 26, further comprising:
providing a target invocation interface, such that a data entry user interface is invoked in response to a pointing device passing proximal to the target invocation interface.

29. The method recited in claim 26, further comprising:
providing a target invocation interface in response to a detected position of an insertion location.

30. The method recited in claim 26, further comprising:
providing a target invocation interface in response to a detection of an insertion location within a desired control.
